# FASCICULE DE BREVET EUROPEEN

(11) **EP 0 610 594 B1**
(45) Date de publication et mention de la délivrance du brevet: **26.06.1996**
(21) Numéro de dépôt: 93120873.0
(22) Date de dépôt: 24.12.1993
(51) Int. Cl.: G05B 19/4097, G06T 11/00

(54) **Système de conception et de fabrication assistée par ordinateur**
Rechnerunterstütztes Entwurf- und Fertigungssystem
Computer aided design and computer aided manufacturing system

(30) Priorité: 08.02.1993 CH 378/93
(43) Date de publication de la demande: 17.08.1994
(73) Titulaire: Megard, Patrick, CH-1201 Genève (CH); Favre, Serge, CH-1228 Plan-les-Ouates (CH)
(72) Inventeur: Megard, Patrick, CH-1201 Genève (CH); Favre, Serge, CH-1228 Plan-les-Ouates (CH)
(74) Mandataire: Micheli & Cie

(56) Documents cités:
- EP-A- 0 241 071
- EP-A- 0 346 517
- FR-A- 2 675 290
- EUROGRAPHICS '89 : PROCEEDINGS OF THE EUROPEAN COMPUTER GRAPHICS CONFERENCE AND EXHIBITION, 4-8 SEPTEMBRE 1989, HAMBOURG, DE pages 489 - 503, XP143274 D.E. BREEN & V. KÜHN 'Message-based Object-oriented Interaction Modeling'
- COMPUTER AIDED DESIGN, vol.21, no.8, Octobre 1989, LONDON GB pages 528 - 533, XP88135 G.J. JENSE 'Voxel-based methods for CAD'
- COMPUTER AIDED DESIGN, vol.22, no.10, Décembre 1990, LONDON GB pages 633 - 644, XP168885 KOICHI KONDO 'PIGMOD : parametric and interactive geometric modeller for mechanical design'

## Description

La présente invention concerne un système de conception et de fabrication assistée par ordinateur.

Les systèmes traditionnels de conception et/ou de fabrication assistée par ordinateur, ci-dessous abrégé CAO/CFAO, comportent généralement une unité centrale de calcul, un écran permettant de visualiser les objets créés et un dispositif d'introduction de données comme un clavier et/ou un dispositif de pointage comme une souris. Ces systèmes sont également dotés d'une interface utilisateur comportant des programmes permettant d'assister l'utilisateur dans la création et la modification de représentations d'objets en les faisant apparaître sur l'écran en deux ou trois dimensions, ceci afin de leur faire subir un traitement ultérieur, comme par exemple une impression sur papier ou le pilotage d'une machine outil. Lors de l'utilisation de tels systèmes, l'utilisateur est confronté à un problème de formation initiale compte tenu du nombre élevé de commandes et/ou de manipulations à mémoriser pour représenter un objet. De plus, une fois l'apprentissage terminé, l'utilisateur doit très souvent, lors de la création ou de la modification d'un objet, exécuter de façon répétitive une série de commandes ou de manipulations qui sont toujours identiques pour une tâche donnée, ce qui résulte en une augmentation du temps de travail. Lors de l'exploitation de système CAO/CFAO par un groupe de personnes, se pose le problème de la normalisation des objets (dessins, plans, chemin d'usinage, etc..) au sein de l'entreprise; en effet la souplesse offerte par ces systèmes CAO/CFAO est telle que chacun adopte un certain nombre de conventions ou de règles (options de construction dans différents plans, épaisseur des traits, type de hachure, polices de caractères) si bien qu'il devient difficile pour une personne qui n'est pas le concepteur d'un dessin de le modifier.

Les interfaces utilisateurs multi-fenêtres permettent de résoudre en partie ces problèmes. L'utilisation d'une souris qui permet de déplacer un pointeur sur l'écran pour sélectionner une commande, dans un menu déroulant par exemple, réduit le nombre de commandes à mémoriser et permet une sélection rapide. Néanmoins, pour beaucoup de commandes il faut introduire un nombre de paramètres important, ce qui implique une succession de manipulations de la souris dans une cascade de menus apparaissant à l'écran. Certaines interfaces utilisent également des menus comportant des icônes stylisant les commandes ou les objets, ceci améliore l'aspect ergonomique mais ne lève pas non plus la nécessité de devoir définir de nombreux paramètres pour certaines opérations.

Le brevet européen EP 0 241 071 B1 divulgue un système CAO/CFAO utilisant un procédé permettant de créer et de traiter des modèles d'objets à deux ou à trois dimensions et de reproduire ces modèles sur un visuel. Un diagramme de structure arborescent, associant un mot à chaque élément hiérarchique de l'objet, est reproduit sur l'écran en même temps que l'image du modèle et la sélection d'un mot dans le diagramme de structure permet d'effectuer une opération sur l'élément correspondant, ainsi que sur tous les éléments hiérarchiquement inférieurs, éliminant de ce fait la nécessité d'appliquer cette opération à chaque élément de niveau inférieur. Ce système ne permet pas en revanche de diminuer le nombre de commandes ou de manipulations à effectuer pour saisir les paramètres caractéristiques d'une commande lors de la création d'un nouveau modèle.

Le but de la présente invention est de réduire le nombre de manipulations ou de commandes à introduire dans un système CAO/CFAO lors de la création d'un nouvel objet ou de la modification d'un objet existant. La présente invention a également pour but d'améliorer la normalisation des résultats obtenus à l'aide de ces systèmes au sein de l'entreprise.

La présente invention a pour objet un système de CAO/CFAO utilisant un procédé, obviant aux inconvénients précités et qui se distingue par les caractéristiques énumérées à la revendications 1.

Le dessin annexé illustre schématiquement et à titre d'exemple certaines étapes du procédé selon la présente invention.

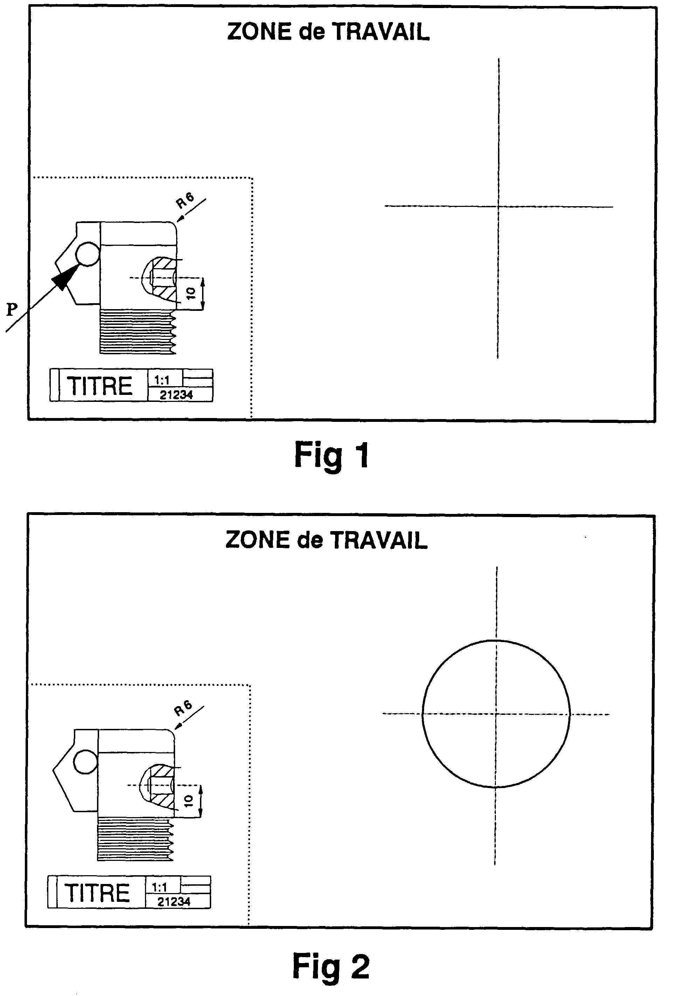

Les figures 1 à 4 représentent le dispositif d'affichage du système CAO/CFAO à différents stades.

On se servira pour décrire le procédé objet de la présente invention d'un système CAO/CFAO comportant un écran, un clavier, un dispositif de pointage comme une souris ainsi qu'une interface utilisateur multi-fenêtres permettant d'afficher sur une zone ou fenêtre de l'écran la représentation en deux ou trois dimensions d'un objet ou le parcours de l'outil qui sert à le produire. On notera que le nombre de fenêtres ainsi que leur disposition n'est pas important, l'utilisateur pouvant en choisir le nombre, la disposition et la taille.

L'exemple qui suit concerne la réalisation d'un dessin que l'utilisateur va créer en se servant des commandes à disposition dans le logiciel de CAO/CFAO. Un élément se définit par toute entité indépendante, partie du dessin, sur laquelle on peut effectuer une opération. Un dessin est composé d'un ensemble d'éléments possédant chacun certains attributs. Par exemple une droite, élément d'un dessin, aura entre autre comme attribut l'épaisseur ou la couleur du trait utilisé pour la représenter sur l'écran. Une commande ou fonction permet généralement lorsqu'on l'exécute soit de créer un nouvel élément, soit de modifier les attributs d'un élément existant. Chaque commande ou fonction peut nécessiter la définition préalable d'un certain nombre de paramètres. Par exemple la commande permettant de faire subir une rotation à un élément nécessite l'introduction de la valeur de l'angle de rotation. Selon les paramètres définis pour une commande donnée, on obtiendra après l'exécution de ladite commande un élément possédant certains attributs. Un élément prend donc différents aspects selon les paramètres définis pour la commande qui a permis de le générer.

Généralement, dans les systèmes traditionnels de CAO/CFAO, on mémorise dans la mémoire du dispositif les éléments générés ainsi que leurs attributs, de sorte que l'on puisse ultérieurement afficher le dessin à l'écran afin d'y apporter des modifications. Le procédé selon la présente invention comprend les étapes suivantes.
1. La sélection d'une commande permettant de créer un élément parmi celles à disposition dans le système CAO/CFAO.
2. La définition des paramètres relatifs à cette commande afin d'obtenir un élément possédant certains attributs déterminés.
3. L'exécution de la commande provoquant l'affichage à l'écran de l'élément créé, ainsi que la mémorisation dans une mémoire du type d'élément créé et de ses attributs.
4. La mémorisation dans une mémoire du type de commande qui a permis de générer ledit élément, ainsi que les paramètres associés à cette commande.
5. Les étapes 1 à 4 permettent de constituer un élément de référence; elles peuvent être répétées.
6. La sélection d'un des éléments de référence ou de l'un de ses attributs à l'aide du dispositif de pointage.
7. Le déclenchement d'un des organe de contrôle du dispositif de pointage provoquant l'accès à la mémoire contenant les informations relatives à l'élément de référence sélectionné et l'activation de la commande associée à cet élément permettant de ce fait de créer un élément similaire, les paramètres associés à la commande étant les mêmes par défaut que ceux introduits lors de la création de l'élément de référence.

Lors de la sélection opérée au point 6, le déclenchement d'un second organe de contrôle du dispositif de pointage, provoque l'affichage sur l'écran des paramètres associés à la commande qui a permis de générer l'élément sélectionné. Ce qui permet à l'utilisateur de créer un élément du même type que l'élément sélectionné mais possédant d'autres attributs.

Les différentes étapes de la construction d'une droite vont maintenant être détaillées ci-dessous à titre d'exemple.

On définit préalablement le niveau dans lequel on désire construire cette droite. L'utilisation de différents 'niveaux' permet de décomposer un dessin complexe en une juxtaposition de plans. Ainsi en construisant certains éléments dans des niveaux différents, on peut obtenir des vues partielles de l'objet ne regroupant que les éléments situés dans un niveau. En plaçant par exemple dans le niveau 0 les éléments de structure d'un objet et dans le niveau 1 les cotations, on peut en activant et/ou en inhibant l'affichage des niveaux appropriés, visualiser l'objet avec ou sans cotation. Il faut ensuite définir le point de départ, le point d'arrivée ainsi que différents paramètres relatifs au type de trait utilisé (plein, pointillé, discontinu, ..), à l'épaisseur de ce trait ou à la couleur utilisée pour représenter cette droite sur l'écran. Ces différents paramètres sont sauvegardés dans la mémoire de l'unité de calcul ainsi que les informations permettant de localiser cette droite dans le dessin. Lorsque l'on veut construire une seconde droite, à la place d'activer le menu permettant de tracer des droites à l'aide de la souris, puis d'introduire les paramètres relatifs à l'épaisseur du trait, du type de trait, etc.. comme précédemment, on va simplement pointer à l'aide de la souris n'importe quel point situé sur la première droite et actionner l'un des boutons de la souris. Lors de cette opération, et grâce aux informations mémorisées lors de la construction de la première droite, le système se met automatiquement dans le mode de création de droite. Pour définir une nouvelle droite, il suffit donc de définir les deux points entre lesquels on désire faire passer cette nouvelle droite, les paramètres de l'épaisseur du trait ainsi que du type de trait et le niveau de construction utilisé étant par défaut les mêmes que ceux qui ont été définis pour la première droite. Il est toutefois évident que l'on peut modifier ultérieurement si nécessaire les paramètres concernant la deuxième droite.

Usuellement lorsque l'on procède aux modifications de certaines caractéristiques ou attributs d'un élément, comme par exemple l'épaisseur du trait, on sélectionne dans les menus, grâce au dispositif de pointage, la commande ou fonction permettant de modifier l'épaisseur d'un trait puis on introduit dans le système la valeur de l'épaisseur désirée. Ceci peut impliquer un nombre relativement élevé de manipulations suivant la fonction ou la caractéristique que l'on désire modifier. Lorsque l'on désire modifier une caractéristique d'un élément, il suffit selon la présente invention de sélectionner à l'aide du dispositif de pointage, une caractéristique similaire sur un autre élément affiché sur l'écran pour faire apparaître directement les paramètres concernant les caractéristiques en cause. Ainsi, par exemple si l'on désire hachurer une partie du dessin affiché sur l'écran, il suffit de positionner la souris sur n'importe quelle autre zone de hachure et d'actionner un des boutons de la souris pour faire apparaître immédiatement à l'écran les paramètres permettant de modifier le type de ligne utilisée pour les hachures, l'espacement et l'inclinaison de ces lignes.

Si comme décrit ci-dessus, des éléments d'un même dessin peuvent servir de base pour créer un nouvel élément qui 'hérite' des caractéristiques de l'élément sélectionné, il est également possible de faire apparaître un dessin préalablement réalisé et enregistré, dans une autre fenêtre que l'on active sur l'écran, puis de pointer un élément quelconque de ce dessin pour que le système permette de créer un élément du même type possédant les mêmes caractéristiques dans un dessin en cours de travail situé dans une autre fenêtre affichée sur l'écran du dispositif. Pour illustrer ce qui précède, il est fait référence aux dessins qui illustrent un exemple simplifié permettant de mettre en évidence les différentes étapes. La figure 1 montre l'écran du système CAO/CFAO. Dans une première zone de l'écran située en bas à gauche, un dessin comportant divers éléments est affiché. Une flèche P symbolise la zone de l'écran adressée par le dispositif de pointage. Le reste de l'écran constitue la zone de travail dans laquelle un nouveau dessin va être créé.

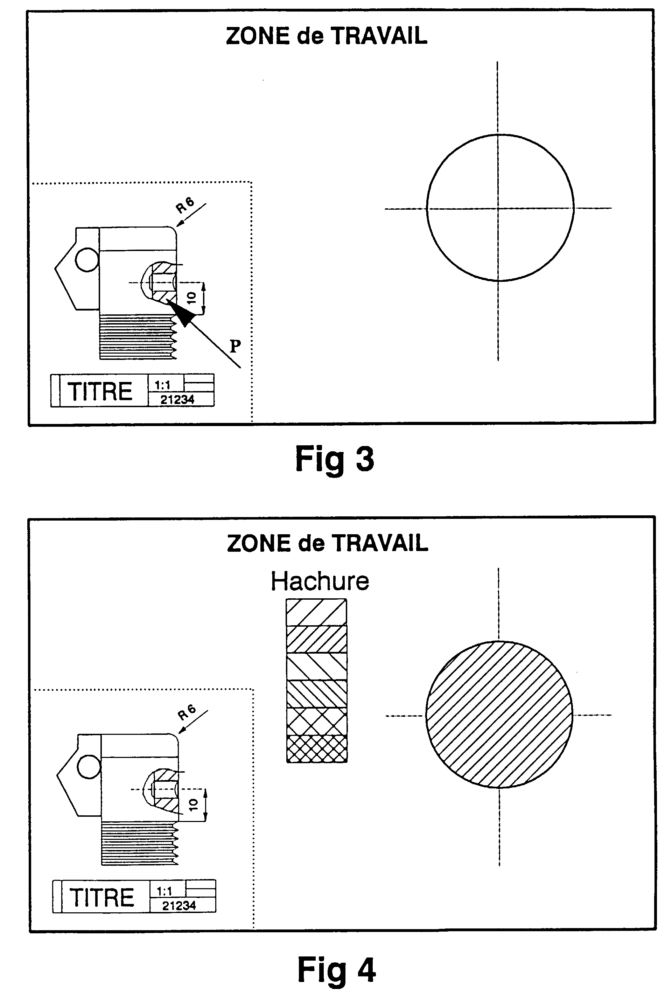

La première opération consiste à sélectionner un élément du dessin affiché dans la première zone de l'écran comme cela est illustré par la flèche P qui pointe sur un élément de type cercle. Le système après avoir accédé aux informations correspondant à la commande qui a permis de créer ce cercle, active la commande permettant de créer un cercle avec, par défaut, les paramètres utilisés pour la création du premier cercle. La figure 2 est une vue de l'écran sur laquelle on voit un nouveau cercle créé dans la zone de travail. La figure 3 illustre la possibilité de sélectionner un attribut d'un élément, ici la flèche P pointe sur une zone de hachure. Après avoir actionné un des organes de contrôle du dispositif de pointage le système fait apparaître comme le montre la figure 4, un menu permettant d'accéder directement aux paramètres relatifs à la commande permettant de hachurer un élément. Il ne reste plus qu'à sélectionner le type de hachure désiré pour l'appliquer à un élément.

On notera encore qu'un dispositif tel qu'une tablette à digitaliser ou digitaliseur, qui permet aussi de sélectionner par pointage visuel un point quelconque d'un dessin posé sur la tablette, peut très bien être utilisé comme dispositif de pointage. Dans ce cas la sélection ne s'opère plus en déplaçant un curseur sur l'écran à l'aide d'une souris mais en utilisant la tablette à digitaliser.

Il est donc aisé de créer un dessin de référence comprenant les principaux éléments des réalisations que l'on est amené à produire le plus fréquemment pour diminuer considérablement le nombre de commandes ou de manipulations à introduire dans le système CAO/CFAO lors de la création de nouveaux dessins. On notera également le caractère évolutif d'un système mettant en oeuvre le procédé décrit, dans la mesure où chaque nouvel élément créé peut servir à son tour d'élément de référence. Lorsqu'un dessin de référence peut être partagé par plusieurs utilisateurs, dans une installation comprenant plusieurs systèmes CAO/CFAO reliés par un réseau informatique par exemple, on facilite considérablement la normalisation des dessins produits. En effet, l'aspect final des réalisations sera uniforme si les utilisateurs se servent des éléments du dessin de référence pour leurs nouvelles créations.

Dans les exemples décrits ci-dessus il est fait référence à une droite ou à un cercle ainsi qu'à l'aspect de hachures, qui sont des éléments et une caractéristique relativement simple. Il est clair que le même procédé s'applique à tout autre élément ou tout autre caractéristique plus complexe notamment dans le domaine de la CAO/CFAO tridimensionnelle ou des tolérances d'usinage.

Il est fait référence ci-dessus à un 'dessin', ce qui précède s'applique bien évidemment à toutes autres réalisations qui peuvent être obtenues à l'aide d'un système de CAO/CFAO tels que des tracés d'usinage par exemple.

Le dispositif permettant de mettre en oeuvre le procédé décrit ci-dessus comporte généralement une unité de calcul à micro-processeur munie d'une mémoire (RAM) ainsi qu'une unité de sauvegarde de masse tel qu'un disque magnétique ou optique. Il comporte en outre des moyens permettant d'afficher une représentation graphique d'un objet ainsi que des moyens de pointage permettant d'introduire des ordres dans le système. L'interface utilisateur sur de tels systèmes peut prendre des formes différentes. On peut introduire des commandes dans le système par exemple en tapant des ordres reconnus par le système sur un clavier ou sélectionner une commande dans un menu affiché à l'écran à l'aide du dispositif de pointage. On peut également envisager une tablette à digitaliser. On préférera une interface utilisateur multi-fenêtres dans laquelle on peut opérer des sélections dans des menus ou des icônes affichés à l'écran grâce à une souris. Ces systèmes comportent également des périphériques de sortie comme des imprimantes ou des traceurs. De tels dispositifs permettent de mettre en oeuvre le procédé décrit ci-dessus et de ce fait de produire plus rapidement et avec moins de manipulations les résultats attendus. Dans le cas d'une utilisation collective de tels systèmes connectés entre eux par un réseau informatique par exemple, on améliore grandement l'uniformisation des résultats.

## Revendications

1. Système CAO/CFAO utilisant un procédé permettant de créer et de traiter des représentations d'objets en deux ou trois dimensions dans un ordinateur et de reproduire ces représentations grâce à des moyens de visualisation et/ou de fabrication selon lequel
- au moins un élément est construit, cet élément possédant divers attributs fonction des paramètres relatifs à la commande qui a permis de générer ledit élément.
- les informations relatives à l'élément construit, tel que le type de cet élément, ses attributs, et les relations qui le lient à d'autres éléments sont sauvegardées dans une mémoire.
caractérisé
- en ce que les informations relatives à la commande qui a permis de générer ledit élément ainsi que les paramètres de cette commande sont sauvegardées dans une mémoire, de façon que cet élément devient un élément de référence permettant de construire d'autres éléments similaires.
- en ce que l'accès à une commande ou à ses paramètres est obtenu par sélection visuelle à l'aide d'un dispositif de pointage d'un élément ou d'un élément de référence respectivement d'une caractéristique d'un élément ou d'une caractéristique d'un élément de référence.

2. Système CAO/CFAO selon la revendication 1, caractérisé par le fait que la représentation comportant les éléments de référence parmi lesquels s'opère la sélection par pointage est affichée sur une zone de l'écran.

3. Système CAO/CFAO selon la revendication 1, caractérisé par le fait que la représentation comportant les éléments de référence parmi lesquels s'opère la sélection par pointage est accédée à l'aide d'un digitaliseur.

4. Système CAO/CFAO selon la revendication 2, caractérisé par le fait que la zone de l'écran sur laquelle est affichée la représentation comportant les éléments de référence parmi lesquels s'opère la sélection par pointage se confond avec la zone de travail sur laquelle se trouve la représentation en cours d'élaboration.

5. Système CAO/CFAO selon la revendication 2, caractérisé par le fait que la zone de l'écran sur laquelle est affichée la représentation comportant les éléments de référence parmi lesquels s'opère la sélection par pointage est distincte de la zone de travail.

6. Système CAO/CFAO selon l'une des revendications précédentes, caractérisé par le fait que l'accès aux paramètres d'une commande est réalisé par l'affichage à l'écran d'un menu d'ordre.

## Patentansprüche

1. CAD/CAM-System, das ein Verfahren benutzt, mit dem Darstellungen von Gegenständen in zwei oder drei Dimensionen auf einem Computer erstellt und bearbeitet und durch Organe der bildlichen Darstellung und/oder Fertigung reproduziert werden können, gemäss welchem
- zumindest ein Element konstruiert wird, das verschiedene Eigenschaften besitzt, die von den zugeordneten Parametern des Befehls abhängen, der das benannte Element zu erzeugen gestattete, und
- die das konstruierte Element betreffenden Daten, wie zum Beispiel der Typ dieses Elements, seine Eigenschaften und die Beziehungen, die es mit anderen Elementen verbinden, in einem Speicher gesichert werden,
dadurch gekennzeichnet, dass
- die zugeordneten Daten des Befehls, der das benannte Element zu erzeugen gestattete, wie auch die Parameter dieses Befehls in einem Speicher gesichert werden, so dass dieses Element zu einem Bezugselement wird, das andere ähnliche Elemente zu konstruieren gestattet, und
- der Zugriff zu einem Befehl oder zu seinen Parametern durch visuelle Auswahl eines Elements, eines Bezugselements, eines Merkmales eines Elements bzw. eines Merkmales eines Bezugselements mit Hilfe einer Zeigervorrichtung erhalten wird.

2. CAD/CAM-System gemäss Anspruch 1, dadurch gekennzeichnet, dass die Darstellung mit den Bezugselementen, unter denen die Auswahl durch Zeiger getroffen wird, in einem Bereich des Bildschirms angezeigt wird.

3. CAD/CAM-System gemäss Anspruch 1, dadurch gekennzeichnet, dass der Zugriff auf die Darstellung mit den Bezugselementen, unter denen die Auswahl durch Zeiger getroffen wird, mit Hilfe eines Analog-Digital-Wandlers erfolgt.

4. CAD/CAM-System gemäss Anspruch 2, dadurch gekennzeichnet, dass der Bereich des Bildschirms, in dem die Darstellung mit den Bezugselementen angezeigt wird, unter denen die Auswahl durch Zeiger getroffen wird, und der Arbeitsbereich, in dem sich die in Ausarbeitung befindliche Darstellung befindet, ineinander übergehen.

5. CAD/CAM-System gemäss Anspruch 2, dadurch gekennzeichnet, dass der Bereich des Bildschirms, in dem die Darstellung mit den Bezugselementen angezeigt wird, unter denen die Auswahl durch Zeiger getroffen wird, vom Arbeitsbereich abgehoben ist.

6. CAD/CAM-System gemäss einem der vorstehenden Ansprüche, dadurch gekennzeichnet, dass der Zugriff auf die Parameter eines Befehls durch Bildschirmanzeige eines Befehlsmenüs erfolgt.

## Claims

1. A CAM/CAD system using a method for generating and for processing representations of objects in two or three dimensions using a computer and for displaying these representations on display means and/or reproducing them by manufacturing means, wherein :
- at least one element is constructed, which has various attributes which are dependent on the parameters relating to the command which had enabled the generation of said element,
- the information relating to the element constructed, such as the type of element, its attributes and the relations which link it to other elements are saved in a memory,
characterized
- in that the information relating to the command which had enabled the generation of said element, as well as the parameters of this command are saved in a memory, in such a manner that this element becomes a reference element enabling the construction of other similar elements,
- in that the access to a command or to its parameters is obtained by visual selection using a pointer device, of an element, of a reference element, of a characteristic of an element or of a characteristic of a reference element.

2. A CAD/CAM system according to claim 1, characterized in that the representation, including reference elements amongst which is made the selection by the use of a pointer, is displayed on a zone of the screen.

3. A CAM/CAD system according to claim 1, characterized in that the representation including the reference elements amongst which is made the selection by a pointer is accessed to by means of a digitizer.

4. A CAM/CAD system according to claim 2, characterized in that the zone on the screen on which is displayed the representation including reference elements amongst which is made the selection using a pointer, coincides with the working zone on which is located the representation being constructed.

5. A CAM/CAD system according to one of the preceding claims, characterized in that the zone of the screen on which is displayed the representation including reference elements amongst which is made the selection using a pointer, is distinct from the working zone.

6. A CAM/CAD system according to one of the preceding claims, characterized in that the access to the parameters of a command can be achieved using a command menu displayed on the screen.
